# EUROPÄISCHE PATENTSCHRIFT

(11) **EP 1 973 760 B1**
(45) Veröffentlichungstag und Bekanntmachung des Hinweises auf die Patenterteilung: **22.07.2009**
(21) Anmeldenummer: 06705396.7
(22) Anmeldetag: 16.03.2006
(51) Int. Cl.: B60L 11/02, H02K 16/04

(54) **KRAFTSTOFFELEKTRISCHES ANTRIEBSSYSTEM**
FUEL/ELECTRIC DRIVE SYSTEM
SYSTÈME D'ENTRAÎNEMENT ÉLECTRIQUE À CARBURANT

(30) Priorität: 17.01.2006 US 759053 P
(43) Veröffentlichungstag der Anmeldung: 01.10.2008
(73) Patentinhaber: ABB Schweiz AG, 5400 Baden (CH)
(72) Erfinder: STEIMER, Peter, CH-5420 Ehrendingen (CH)
(74) Vertreter: ABB Patent Attorneys
(86) Internationale Anmeldenummer: PCT/CH2006/000156
(87) Internationale Veröffentlichungsnummer: WO 2007/082393

(56) Entgegenhaltungen:
- EP-A1- 0 577 980
- DE-A1- 2 823 225
- FR-A1- 2 756 118

## Beschreibung

### Technisches Gebiet

Die Erfindung bezieht sich auf das Gebiet der Antriebssysteme. Sie geht aus von einem kraftstoffelektrischen Antriebssystem gemäss dem Oberbegriff des unabhängigen Anspruchs.

### Stand der Technik

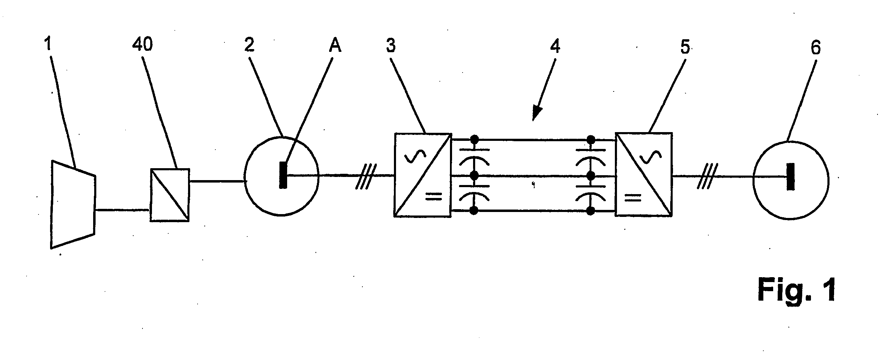

Kraftstoffelektrische Antriebssysteme werden heute vermehrt in marinen Anwendungen, aber auch in schienengebundenen Fahrzeugen sowie in Automobilen eingesetzt. Ein derartiges kraftstoffelektrisches Antriebssystem nach dem Stand der Technik ist beispielhaft in Fig. 1 angegeben. Darin weist das gängige kraftstoffelektrische Antriebssystem eine Brennkraftmaschine und einen von der Brennkraftmaschine angetriebenen Generator auf. Typischerweise ist zwischen die Brennkraftmaschine und dem Generator ein Getriebe zwischengeschaltet. Der Generator weist typischerweise einen einzigen Statorwicklungssatz auf. Mit diesem Statorwicklungssatz ist ein Gleichrichter wechselspannungsseitig verbunden. Der Gleichrichter ist ferner gleichspannungsseitig mit einem Gleichspannungskreis verbunden, wobei ein Wechselrichter zur Speisung eines Antriebsmotors an den Gleichspannungskreis angeschlossen ist, wie z.B. aus DE 28 23 225 A1 bekannt.

Problematisch bei einem vorstehend beschriebenen kraftstoffelektrischen Antriebssystem nach dem Stand der Technik, insbesondere nach Fig. 1, ist, dass bei Ausfall des Generators, beispielsweise durch einen Fehler oder Kurzschluss in dem einen Statorwicklungssatz, der Antriebsmotor nicht mehr ausreichend gespeist werden kann und das gesamte Antriebssystem damit nicht mehr zur Verfügung steht. Zudem können die nachfolgenden Elemente, wie Gleichrichter, Gleichspannungskreis, Wechselrichter und Antriebsmotor bei Ausfall des Generators beschädigt werden.

### Darstellung der Erfindung

Aufgabe der Erfindung ist es deshalb, ein robustes kraftstoffelektrisches Antriebssystem, welches zudem eine hohe Verfügbarkeit aufweist, bereitzustellen. Diese Aufgabe wird durch die Merkmale des Anspruchs 1 gelöst. In den abhängigen Ansprüchen sind vorteilhafte Weiterbildungen der Erfindung angegeben.

Das erfindungsgemässe kraftstoffelektrische Antriebssystem umfasst eine Brennkraftmaschine und einen von der Brennkraftmaschine angetriebenen Generator, welcher Generator einen ersten Statorwicklungssatz aufweist. Desweiteren umfasst das kraftstoffelektrische Antriebssystem einen ersten Gleichrichter, welcher erste Gleichrichter wechselspannungsseitig mit dem ersten Statorwicklungssatz und gleichspannungsseitig mit einem ersten Gleichspannungskreis verbunden ist. Ferner umfasst das kraftstoffelektrische Antriebssystem einen ersten Wechselrichter, welcher erste Wechselrichter gleichspannungsseitig mit dem ersten Gleichspannungskreis und wechselspannungsseitig mit einem Antriebsmotor verbunden ist. Erfindungsgemäss weist der Generator einen zweiten Statorwicklungssatz auf. Weiterhin ist ein zweiter Gleichrichter wechselspannungsseitig mit dem zweiten Statorwicklungssatz und gleichspannungsseitig mit einem zweiten Gleichspannungskreis verbunden. Darüber hinaus ist ein zweiter Wechselrichter gleichspannungsseitig mit dem zweiten Gleichspannungskreis und wechselspannungsseitig mit dem Antriebsmotor verbunden. Mittels des zweiten Statorwicktungssatzes, des damit verbundenen zweiten Gleichrichters und des über den zweiten Gleichspannungskreis mit dem zweiten Gleichrichter verbundenen Wechselrichters ist vorteilhaft ein redundanter Speisungsweg zur Speisung des Antriebsmotors gegeben, so dass der Antriebsmotor beispielsweise bei einen Fehler oder Kurzschluss in einem der beiden Statorwicklungssätze mit Vorteil über den anderen, nicht fehlerbehafteten Speisungsweg gespeist werden kann. Damit steht das Antriebssystem bei einem Fehler nachwievor zur Verfügung. Demnach ist das erfindungsgemässe kraftstoffelektrische Antriebssystem insgesamt sehr robust. Weiterhin lässt sich die Brennkraftmaschine durch den Generator mit den zwei Statorwicklungssätzen und den nachgeschalteten Elementen des Antriebssystems drehzahlvariable und damit vorteilhaft kraftstoffeffizient betreiben. Zudem kann durch den drehzahlvariablen Betrieb auf ein Getriebe zwischen Brennkraftmaschine und Generator verzichtet werden.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine Ausführungsform eines kraftstoffelektrischen Antriebssystems nach dem Stand der Technik,
- Fig. 2: eine erste Ausführungsform des erfindungsgemässen kraftstoffelektrischen Antriebssystems,
- Fig. 3: eine zweite Ausführungsform des erfindungsgemässen kraftstoffelektrischen Antriebssystems,
- Fig. 4: eine dritte Ausführungsform des ertndungsgemässen kraftstoffelektrischen Antriebssystems,
- Fig. 5: eine vierte Ausführungsform des erfindungsgemässen kraftstoffelektrischen Antriebssystems und
- Fig. 6: eine fünfte Ausführungsform des erfindungsgemässen kraftstoffelektrischen Antriebssystems.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

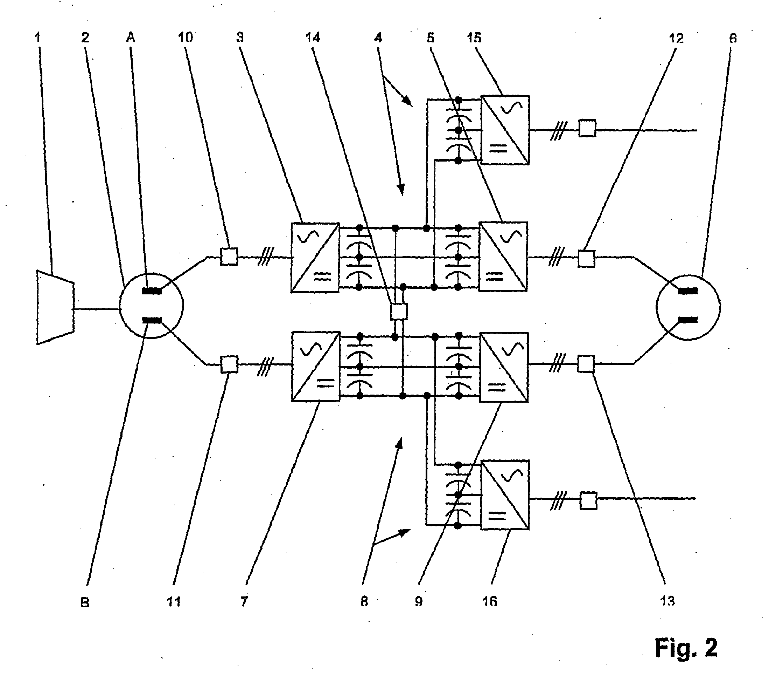

In Fig. 2 ist eine erste Ausführungsform des erfindungsgemässen kraftstoffelektrischen Antriebssystems gezeigt. Darin umfasst das kraftstoffelektrische Antriebssystem eine Brennkraftmaschine 1 und einen von der Brennkraftmaschine 1 angetriebenen Generator 2, welcher Generator 2 einen ersten Statorvuicklungssatz A aufweist. Die Brennkraftmaschine 1 ist beispielsweise als Dieselmotor, als Gasturbine oder allgemein als irgendeine, dem Fachmann bekannte Brennkraftmaschine ausgebildet. Desweiteren umfasst das kraftstoffelektrische Antriebssystem einen ersten Gleichrichter 3, welcher erste Gleichrichters 3 wechselspannungsseitig mit dem ersten Statorwicklungssatz A und gleichspannungsseitig mit einem ersten Gleichspannungskreis 4 verbunden ist. Ferner umfasst das kraftstoffelektrische Antriebssystem einen ersten Wechselrichter 5, welcher erste Wechselrichter 5 gleichspannungsseitig mit dem ersten Gleichspannungskreis 4 und wechselspannungsseitig mit einem Antriebsmotor 6 verbunden ist.

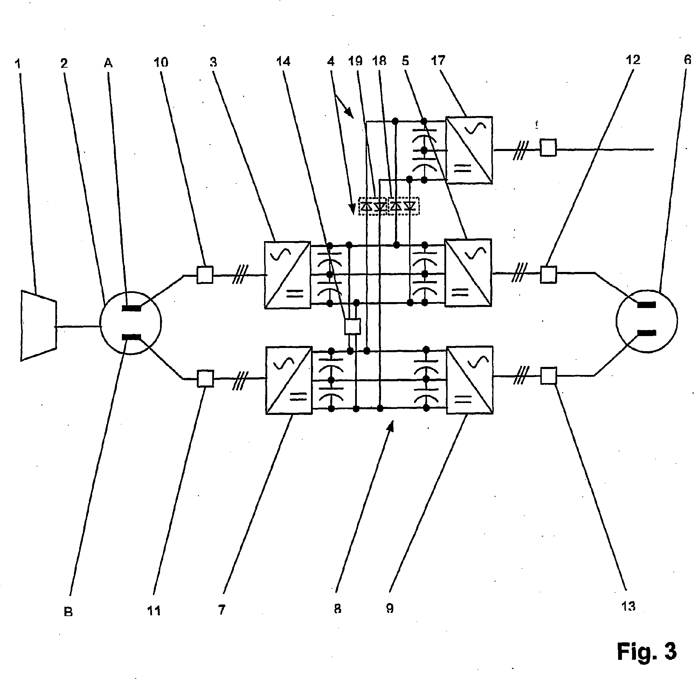

Erfindungsgemäss weist der Generator 1 einen zweiten Statorwicklungssatz A auf. Allgemein umfasst jeder Statorwicklungssatz A, B e Phasenwicklungen, wobei e ≥ 3 ist. In den in Fig. 2 sowie in den nachfolgend noch detailliert beschriebenen Ausführungsformen gemäss Fig. 3 bis Fig. 6 sind jeweils zwei Statorwicklungssätze A, B mit jeweils e=3 Phasenwicklungen angenommen. Weiterhin ist gemäss Fig. 2 ein zweiter Gleichrichter 7 wechselspannungsseitig mit dem zweiten Statorwicklungssatz B und gleichspannungsseitig mit einem zweiten Gleichspannungskreis 8 verbunden. Darüber hinaus ist ein zweiter Wechselrichter 9 gleichspannungsseitig mit dem zweiten Gleichspannungskreis 8 und wechselspannungsseitig mit dem Antriebsmotor 6 verbunden. Allgemein umfasst der Antriebsmotor 6 ebenfalls zwei Statorwicklungssätze, wobei jeder Statorwicklungssatz a Phasenwicklungen aufweist, wobei a ≥ 3 ist. In den in Fig. 2 sowie in den nachfolgend noch detailliert beschriebenen Ausführungsformen gemäss Fig. 3 bis Fig. 6 sind bezüglich des Antriebsmotors 6 jeweils zwei Statorwicklungssätze mit jeweils a=3 Phasenwicklungen angenommen. Mit Hilfe des zweiten Statorwicklungssatzes B des Generators 2, des damit verbundenen zweiten Gleichrichters 7 und des über den zweiten Gleichspannungskreis 8 mit dem zweiten Gleichrichter 7 verbundenen Wechselrichters 9 ist vorteilhaft ein redundanter Speisungsweg zur Speisung des Antriebsmotors 6 gegeben, so dass der Antriebsmotor 6 beispielsweise bei einen Fehler oder Kurzschluss in einem der beiden Statorwicklungssätze A, B mit Vorteil über den anderen, nicht fehlerbehafteten Speisungsweg gespeist werden kann. Damit steht das kraftstoffelektrische Antriebssystem bei einem Fehler nachwievor zur Verfügung, d.h. der Antriebsmotor 6 kann weiter gespeist werden. Demnach ist das erfindungsgemässe kraftstoffelektrische Antriebssystem insgesamt sehr robust und weist eine hohe Verfügbarkeit auf. Weiterhin lässt sich die Brennkraftmaschine 1 durch den Generator 2 mit den zwei Statorwicklungssätzen A, B und den nachgeschalteten Elementen 3, 4, 5, 6 des Antriebssystems drehzahlvariable und damit vorteilhaft kraftstoffeffizient betreiben. Zudem kann durch den drehzahlvariablen Betrieb auf ein Getriebe 40, welches gängigeniveise zwischen die Brennkraftmaschine 1 und dem Generator 2 zwischengeschaltet ist, wie in der Ausführungsform des kraftstoffelektrischen Antriebssystems nach dem Stand der Technik gezeigt, verzichtet werden.

Gemäss Fig. 2 ist in die Verbindung des ersten Statorwicklungssatzes A mit dem ersten Gleichrichter 3 ein Trennschalter 10 eingeschaltet und in die Verbindung des zweiten Statorwicklungssatzes B mit dem zweiten Gleichrichter 7 ein Trennschalter 11 eingeschaltet. Tritt beispielsweise ein Fehler in einem der Statorwicklungssätze A, B des Generators 2 auf, so kann der mit dem fehlerbehafteten Statorwicklungssatz A, B verbundene Gleichrichter 3, 7 einfach und schnell durch den jeweiligen Trennschalter 10, 11 abgetrennt werden und dieser Gleichrichter 3, 7 sowie die nachfolgenden Elemente, wie Gleichspannungskreis 4, 8, Wechselrichter 5, 9 und Antriebsmotor 6 vor Beschädigung oder gar Zerstörung geschützt werden. Es versteht sich, dass der jeweilige Trennschalter 10, 11 auch bei einem Fehler auf der Seite des jeweiligen Gleichrichters 3, 7 ein Abtrennen des jeweiligen Statorwicklungssatzes A, B des Generators 2 ermöglicht. Der jeweilige Trennschalter 10, 11 erlaubt selbstverständlich auch ein Wiederverbinden des entsprechenden Statorwicklungssatzes A, B mit dem jeweiligen Gleichrichter 3, 7, beispielsweise nach Überprüfung des auftretenden Fehlers oder nach Wartungs- oder Reparaturarbeiten.

Gemäss Fig. 2 ist weiterhin in die Verbindung des ersten Wechselrichters 5 mit dem Antriebsmotor 6 ein Trennschalter 12 eingeschaltet und in die Verbindung des zweiten Wechselrichters 9 mit dem Antriebsmotor 6 ebenfalls ein Trennschalter 13 eingeschaltet. Tritt beispielsweise ein Fehler im Antriebsmotor 6 auf, so kann der jeweilige mit dem Antriebsmotor 6 verbundene Wechselrichter 5, 9 einfach und schnell durch den jeweiligen Trennschalter 12, 13 abgetrennt werden und der jeweilige Wechselrichter 5, 9 sowie die vorangehenden Elemente, wie Gleichspannungskreis 4, 8, Gleichrichter 3, 7 und Generator 2 vor Beschädigung oder gar Zerstörung geschützt werden. Es versteht sich, dass der jeweilige Trennschalter 12, 13 auch bei einem Fehler auf der Seite des jeweiligen Wechselrichters 5, 9 ein Abtrennen des Antriebsmotors 6 ermöglicht. Der jeweilige Trennschalter 12, 13 erlaubt selbstverständlich auch ein Wiederverbinden des Antriebsmotors 6 mit dem jeweiligen Wechselrichter 5, 9, beispielsweise nach Überprüfung des auftretenden Fehlers oder nach Wartungs- oder Reparaturarbeiten.

Desweiteren ist der erste Gleichspannungskreis 4 mit dem zweiten Gleichspannungskreis 8 über einen Verbindungsschalter 14 verbindbar und trennbar. Der Verbindungsschalter 14 ermöglich somit eine Speisung des einen Gleichspannungskreises 4, 8 durch den jeweils anderen Gleichspannungskreis 4, 8, falls beispielsweise die Verbindung des ersten Statorwicklungssatzes A mit dem ersten Gleichrichter 3 durch den Trennschalter 10 oder die Verbindung des zweiten Statorwicklungssatzes B mit dem zweiten Gleichrichter 7 durch Trennschalter 11 aufgrund eines vorstehend genannten Fehlers abgetrennt wurde. Demnach kann der Antriebsmotor 6 auch im Fehlerfall vorteilhaft durch den ersten Wechselrichter 5 aus dem ersten Gleichspannungskreis 4 und zudem auch durch den zweiten Wechselrichter 9 aus dem zweiten Gleichspannungskreis 8 gespeist werden.

Ferner sind allgemein x weitere Wechselrichter 15 gleichspannungsseitig mit dem ersten Gleichspannungskreis 4 verbunden, wobei x ≥ 1 ist und in Fig. 2 x=1 weiterer solcher Wechselrichter 15 gleichspannungsseitig mit dem ersten Gleichspannungskreis 4 verbunden ist. Jeder der weiteren x Wechselrichter 15 ermöglicht beispielsweise vorteilhaft die Speisung eines weiteren Antriebsmotors, aber beispielsweise auch die Speisung von Hilfsbetriebeeinrichtungen, wie Lüfter, Klimaanlagen, Stellmotoren, usw.. Es versteht sich, dass ein solcher Wechselrichter 15 auch energierückspeisefähig ausgebildet ist. Zudem sind allgemein y weitere Wechselrichter 16 gleichspannungsseitig mit dem zweiten Gleichspannungskreis 8 verbunden, wobei y ≥ 1 ist und in Fig. 2 y=1 weiterer solcher Wechselrichter 16 gleichspannungsseitig mit dem zweiten Gleichspannungskreis 8 verbunden ist. Jeder der weiteren y Wechselrichter 16 ermöglicht auch in diesem Fall beispielsweise vorteilhaft die Speisung eines weiteren Antriebsmotors, aber beispielsweise auch die Speisung von Hilfsbetriebeeinrichtungen, wie Lüfter, Klimaanlagen, Stellmotoren, usw..

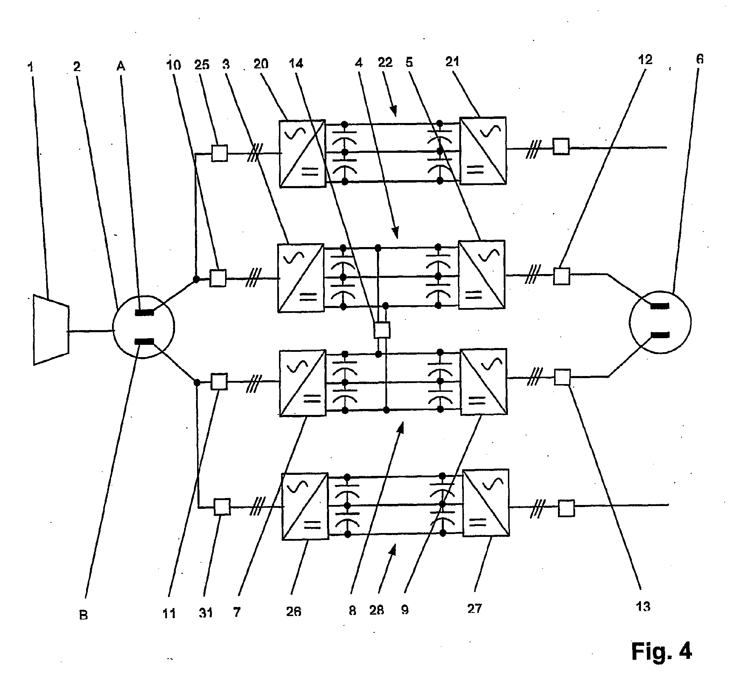

In Fig. 3 ist eine zweite Ausführungsform des erfindungsgemässen kraftstoffelektrischen Antriebssystems gezeigt. Ausgehend von Fig. 2 weist das kraftstoffelektrische Antriebssystem gemäss Fig. 3 allgemein z weitere Wechselrichter 17 auf, die gleichspannungsseitig mit dem ersten Gleichspannungskreis 4 und mit dem zweiten Gleichspannungskreis 8 verbunden sind, wobei z ≥ 1 ist und in Fig. 3 z=1 weiterer solcher Wechselrichter 17 gleichspannungsseitig mit dem ersten Gleichspannungskreis 4 und mit dem zweiten Gleichspannungskreis 8 verbunden ist. Vorteilhaft kann dadurch jeder der weiteren z Wechselrichter 17 von beiden Gleichspannungskreisen 4, 8 gespeist werden, wobei jeder der weiteren z Wechselrichter 17 beispielsweise die Speisung eines weiteren Antriebsmotors, aber beispielsweise auch die Speisung von Hilfsbetriebeeinrichtungen, wie Lüfter, Klimaanlagen, Stellmotoren, usw. ermöglicht. Es versteht sich, dass ein solcher Wechselrichter 17 auch energierückspeisefähig ausgebildet ist. Gemäss Fig. 3 ist in jede Verbindung des ersten Gleichspannungskreises 4 mit einem der z weiteren Wechselrichter 17 ein Stromrichtungsbegrenzungselement 18 eingeschaltet und in jede Verbindung des zweiten Gleichspannungskreises 8 mit einem der z weiteren Wechselrichter 17 ein Stromrichtungsbegrenzungselement 19 eingeschaltet. Das jeweilige Stromrichtungsbegrenzungselement 18, 19 dient dazu, dass nur ein Strom in definierter Stromrichtung vom jeweiligen Gleichspannungskreis 4, 8 zu dem jeweiligen Wechselrichter 17 der weiteren z Wechselrichter 17 und definiert wieder zurück fliesst. Dadurch wird vorteilhaft vermieden, dass ein Fehlerstrom, beispielsweise hervorgerufen durch Fehler in den jeweiligen Gleichspannungskreisen 4, 8 und/oder einen Fehler in einem der z weiteren Wechselrichter 17, zum jeweiligen Wechselrichter 17 bzw. in den jeweiligen Gleichspannungskreis 4, 8 fliessen kann und den jeweiligen Wechselrichter 17 bzw. die mit dem jeweiligen Gleichspannungskreis 4, 8 unmittelbar und mittelbar verbundenen Elemente beschädigt oder gar zerstört. Das jeweilige Stromrichtungsbegrenzungselement 18, 19 ist gemäss Fig. 3 vorzugsweise durch Dioden ausgebildet und somit vorteilhaft sehr einfach und platzsparend realisierbar. Denkbar sind aber auch ansteuerbare Schaltelemente, insbesondere ansteuerbare Leistungshalbleiterschalter. Es sei erwähnt, dass die z weiteren Wechselrichter 17 und deren vorstehend anhand von Fig. 3 detailliert beschriebenen gleichspannungsseitigen Verbindungen auch mit dem kraftstoffelektrischen Antriebssystem nach Fig. 2 sowie mit den nachfolgend noch detailliert beschriebenen kraftstoffelektrischen Antriebssystemen gemäss Fig. 4, Fig. 5 und Fig. 6 kombiniert werden können.

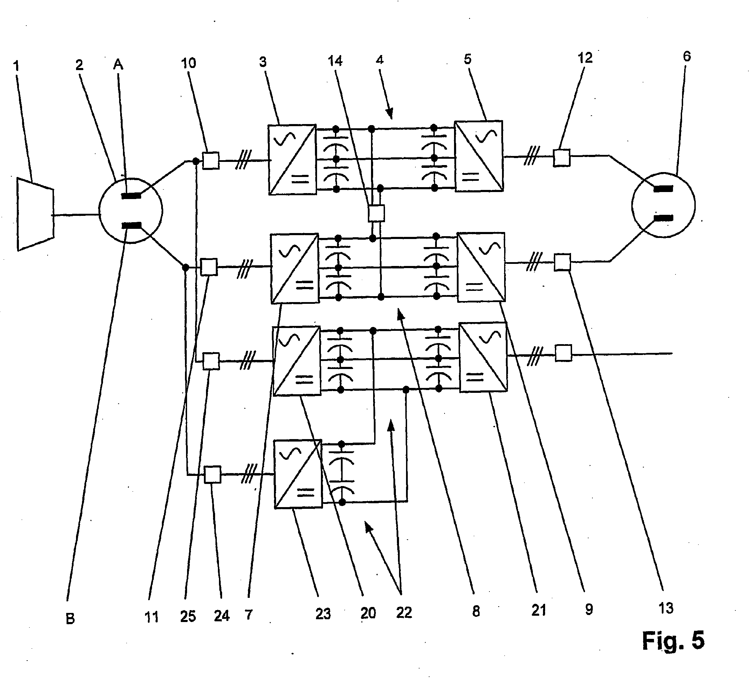

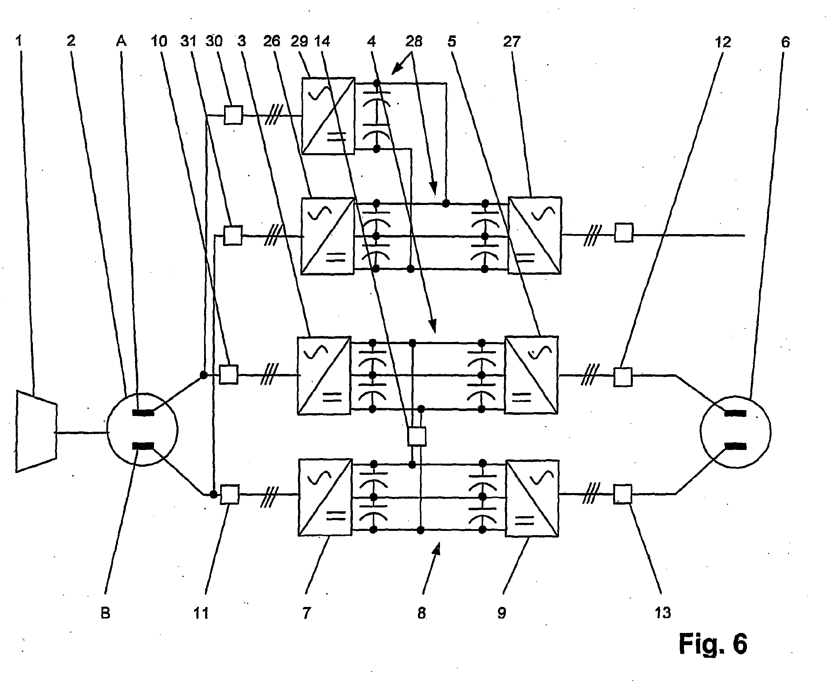

In Fig. 4 ist eine dritte Ausführungsform des erfindungsgemässen kraftstoffelektrischen Antriebssystems dargestellt. Ausgehend von Fig. 2 sind gemäss Fig. 4 allgemein n weitere Gleichrichter 20 wechselspannungsseitig mit dem ersten Statorwicklungssatz A verbunden, wobei n ≥ 1 ist und in Fig. 4 n=1 weiterer Gleichrichter 20 wechselspannungsseitig mit dem ersten Statorwicklungssatz A verbunden ist. Ferner sind gemäss Fig. 4 allgemein m weitere Wechselrichter 21 mit jeweils einem der n Gleichrichter 20 über einen für jeden der n weiteren Gleichrichter 20 vorgesehenen Gleichspannungskreis 22 verbunden, wobei m ≥ 1 ist und in Fig. 4 m=1 weiterer Wechselrichter 21 mit jeweils einem der n Gleichrichter 20 über einen für jeden der n weiteren Gleichrichter 20 vorgesehenen Gleichspannungskreis 22 verbunden ist. Ausgehend vom ersten Statorwicklungssatz A ist damit eine vom ersten und zweiten Gleichspannungskreis 4, 8 separate und unabhängige Speisung beispielsweise eines weiteren Antriebsmotors, aber beispielsweise auch die Speisung von Hilfsbetriebeeinrichtungen, wie Lüfter, Klimaanlagen, Stellmotoren, usw. mittels des jeweiligen weiteren Wechselrichters 21 der m weiteren Wechselrichter 21 ermöglicht. Weiterhin sind gemäss Fig. 4 p weitere Gleichrichter 26 wechselspannungsseitig mit dem zweiten Statorwicklungssatz B verbunden, wobei p ≥ 1 ist und in Fig. 4 p=1 weiterer Gleichrichter 26 wechselspannungsseitig mit dem zweiten Statorwicklungssatz B verbunden ist. Ferner sind gemäss Fig. 4 allgemein q weitere Wechselrichter 27 mit jeweils einem der p Gleichrichter 26 über einen für jeden der p weiteren Gleichrichter 26 vorgesehenen Gleichspannungskreis 28 verbunden sind, wobei q ≥ 1 ist und in Fig. 4 q=1 weiterer Wechselrichter 27 mit jeweils einem der p Gleichrichter 26 über einen für jeden der p weiteren Gleichrichter 26 vorgesehenen Gleichspannungskreis 28 verbunden ist. Ausgehend vom zweiten Statorwicklungssatz B ist damit eine vom ersten und zweiten Gleichspannungskreis 4, 8 separate und unabhängige Speisung beispielsweise eines weiteren Antriebsmotors, aber beispielsweise auch die Speisung von Hilfsbetriebeeinrichtungen, wie Lüfter, Klimaanlagen, Stellmotoren, usw. mittels des jeweiligen weiteren Wechselrichters 27 der q weiteren Wechselrichter 27 ermöglicht. Gemäss Fig. 4 ist in jede Verbindung des ersten Statorwicklungssatzes A mit einem der n weiteren Gleichrichter 20 ein Trennschalter 25 eingeschaltet. Darüber hinaus ist gemäss Fig. 4 zudem in jede Verbindung des zweiten Statorwicklungssatzes B mit einem der p weiteren Gleichrichter 26 ein Trennschalter 31 eingeschaltet. Tritt beispielsweise ein Fehler in einem der Statorwicklungssätze A, B des Generators 2 auf, so kann der mit dem fehlerbehafteten Statorwicklungssatz A, B verbundene weitere Gleichrichter 20, 26 einfach und schnell durch den jeweiligen Trennschafter 25, 31 abgetrennt werden und dieser weitere Gleichrichter 20, 26 sowie die nachfolgenden Elemente, wie Gleichspannungskreis 22, 28 und weiterer Wechselrichter 21, 27 vor Beschädigung oder gar Zerstörung geschützt werden. Es versteht sich, dass der jeweilige Trennschalter 25, 31 auch bei einem Fehler auf der Seite des jeweiligen weiteren Gleichrichters 20, 26 ein Abtrennen des jeweiligen Statorwicklungssatzes A, B des Generators 2 ermöglicht. Der jeweilige Trennschalter 25, 31 erlaubt selbstverständlich auch ein Wiederverbinden des entsprechenden Statorwicklungssatzes A, B mit dem jeweiligen weiteren Gleichrichter 20, 26, beispielsweise nach Überprüfung des auftretenden Fehlers oder nach Wartungs- oder Reparaturarbeiten. Es sei erwähnt, dass die n weiteren Gleichrichter 20 und deren vorstehend anhand von Fig. 4 detailliert beschriebenen Verbindungen und die p weiteren Gleichrichter 26 und deren vorstehend anhand von Fig. 4 detailliert beschriebenen Verbindungen auch mit dem kraftstoffelektrischen Antriebssystem nach Fig. 2, Fig. 3 sowie mit den nachfolgend noch detailliert beschriebenen kraftstoffelektrischen Antriebssystemen gemäss Fig. 5 und Fig. 6 kombiniert werden können.

In Fig. 5 ist eine vierte Ausführungsform des erfindungsgemässen kraftstoffelektrischen Antriebssystems gezeigt. Ausgehend von Fig. 4 sind gemäss Fig. 5 allgemein entsprechend Fig. 4 n weitere Gleichrichter 20 wechselspannungsseitig mit dem ersten Statorwicktungssatz A verbunden sind, wobei n ≥ 1 ist und in Fig. 5 n=1 weiterer Gleichrichter 20 wechselspannungsseitig mit dem ersten Statorwicklungssatz A verbunden ist. Ferner sind gemäss Fig. 5 allgemein m weitere Wechselrichter 21 mit jeweils einem der n Gleichrichter 20 über einen für jeden der n weiteren Gleichrichter 20 vorgesehenen Gleichspannungskreis 22 verbunden, wobei m ≥ 1 ist und in Fig. 5 m=1 weiterer Wechselrichter 21 mit jeweils einem der n Gleichrichter 20 über einen für jeden der n weiteren Gleichrichter 20 vorgesehenen Gleichspannungskreis 22 verbunden ist. Ausgehend vom ersten Statorwicklungssatz A ist damit ist eine vom ersten und zweiten Gleichspannungskreis 4, 8 separate und unabhängige Speisung beispielsweise eines weiteren Antriebsmotors, aber beispielsweise auch die Speisung von Hilfsbetriebeeinrichtungen, wie Lüfter, Klimaanlagen, Stellmotoren, usw. mittels des jeweiligen weiteren Wechselrichters 21 der m weiteren Wechselrichter 21 ermöglicht. Gemäss Fig. 5 ist in jede Verbindung des ersten Statorwicklungssatzes A mit einem der n weiteren Gleichrichter 20 ein Trennschalter 25 eingeschaltet, wobei auf die Funktionsweise und Vorteile auf die bezüglich Fig. 4 gemachten Ausführungen verwiesen wird. Weiterhin sind gemäss Fig. 5 allgemein r weitere Gleichrichter 23 wechselspannungsseitig mit dem zweiten Statorwicklungssatz B verbunden, wobei r ≥1 und n ≥ r ist und in Fig. 5 r=1 weiterer Gleichrichter 23 wechselspannungsseitig mit dem zweiten Statorwicklungssatz B verbunden ist. Zudem ist gemäss Fig. 5 jeder der r weiteren Gleichrichter 23 gleichspannungsseitig jeweils mit einem der für die n weiteren Gleichrichter 20 vorgesehenen Gleichspannungskreise 22 verbunden. Bei einem Fehler beispielsweise im ersten Statorwicklungssatz A des Generators 2 wird der jeweilige weitere Gleichrichter 20 mittels des Trennschalters 25 abgetrennt, wobei eine Speisung des mit dem abgetrennten weiteren Gleichrichter 20 verbundenen Gleichspannungskreise 22 mit Vorteil durch den weiteren Gleichrichter 23 erfolgen kann und somit eine Speisung eines weiteren Antriebsmotors, aber beispielsweise auch die Speisung von Hilfsbetriebeeinrichtungen, wie Lüfter, Klimaanlagen, Stellmotoren, usw. aus diesem Gleichspannungskreis 22 durch den weiteren Wechselrichter 21 auch in einem solchen Fehlerfall ermöglicht ist. Ferner ist in jede Verbindung des zweiten Statorwicklungssatzes B mit einem der r weiteren Gleichrichter 23 ein Trennschalter 24 eingeschaltet, welcher mit Vorteil ein Abtrennen des jeweiligen weiteren Gleichrichters 23 und ein Widerverbinden mit dem zweiten Statorwicklungssatz B des Generators 2 ermöglicht. Es sei erwähnt, dass die r weiteren Gleichrichter 23 und deren vorstehend anhand von Fig. 5 detailliert beschriebenen Verbindungen auch mit dem kraftstoffelektrischen Antriebssystem nach Fig. 2, Fig. 3 und Fig. 4 sowie mit dem nachfolgend noch detailliert beschriebenen kraftstoffelektrischen Antriebssystem gemäss Fig. 6 kombiniert werden können.

In Fig. 6 ist eine fünfte Ausführungsform des erfindungsgemässen kraftstoffelektrischen Antriebssystems gezeigt. Ausgehend von Fig. 4 sind gemäss Fig. 6 allgemein entsprechend Fig. 4 p weitere Gleichrichter 26 wechselspannungsseitig mit dem zweiten Statorwicklungssatz B verbunden, wobei p ≥ 1 ist und in Fig. 6 p=1 weiterer Gleichrichter 26 wechselspannungsseitig mit dem zweiten Statorwicklungssatz B verbunden ist. Ferner sind gemäss Fig. 6 allgemein q weitere Wechselrichter 27 mit jeweils einem der p Gleichrichter 26 über einen für jeden der p weiteren Gleichrichter 26 vorgesehenen Gleichspannungskreis 28 verbunden sind, wobei q ≥ 1 ist und in Fig. 6 q=1 weiterer Wechselrichter 27 mit jeweils einem der p Gleichrichter 26 über einen für jeden der p weiteren Gleichrichter 26 vorgesehenen Gleichspannungskreis 28 verbunden ist. Ausgehend vom zweiten Statorwicklungssatz B ist damit eine vom ersten und zweiten Gleichspannungskreis 4, 8 separate und unabhängige Speisung beispielsweise eines weiteren Antriebsmotors, aber beispielsweise auch die Speisung von Hilfsbetriebeeinrichtungen, wie Lüfter, Klimaanlagen, Stellmotoren, usw. mittels des jeweiligen weiteren Wechselrichters 27 der q weiteren Wechselrichter 27 ermöglicht. Gemäss Fig. 6 ist in jede Verbindung des zweiten Statorwicklungssatzes B mit einem der p weiteren Gleichrichter 26 ein Trennschalter 31 eingeschaltet, wobei auf die Funktionsweise und Vorteile auf die bezüglich Fig. 4 gemachten Ausführungen verwiesen wird. Weiterhin sind gemäss Fig. 6 allgemein v weitere Gleichrichter 29 wechselspannungsseitig mit dem ersten Statorwicklungssatz A verbunden, wobei v ≥ 1 und p ≥ v ist und in Fig. 6 v=1 weiterer Gleichrichter 29 wechselspannungsseitig mit dem ersten Statorwicklungssatz A verbunden ist. Zudem ist gemäss Fig. 6 jeder der v weiteren Gleichrichter 29 gleichspannungsseitig jeweils mit einem der für die p weiteren Gleichrichter 26 vorgesehenen Gleichspannungskreise 28 verbunden. Bei einem Fehler beispielsweise im zweiten Statorwicklungssatz B des Generators 2 wird der jeweilige weitere Gleichrichter 26 mittels des Trennschalters 31 abgetrennt, wobei eine Speisung des mit dem abgetrennten weiteren Gleichrichter 26 verbundenen Gleichspannungskreise 28 mit Vorteil durch den weiteren Gleichrichter 29 erfolgen kann und somit eine Speisung eines weiteren Antriebsmotors, aber beispielsweise auch die Speisung von Hitfsbetriebeeinrichtungen, wie Lüfter, Klimaanlagen, Stellmotoren, usw, aus diesem Gleichspannungskreis 28 durch den weiteren Wechselrichter 27 auch in einem solchen Fehlerfall ermöglicht ist. Ferner ist in jede Verbindung des ersten Statorwicklungssatzes A mit einem der v weiteren Gleichrichter 29 ein Trennschalter 30 eingeschaltet ist, welcher vorteilhaft ein Abtrennen des jeweiligen weiteren Gleichrichters 29 und ein Widerverbinden mit dem ersten Statorwicklungssatz A des Generators 2 ermöglicht. Es sei erwähnt, dass die v weiteren Gleichrichter 29 und deren vorstehend anhand von Fig. 6 detailliert beschriebenen Verbindungen auch mit dem kraftstoffelektrischen Antriebssystem nach Fig. 2, Fig. 3, Fig. 4 und Fig. 5 kombiniert werden können.

### Bezugszeichenliste

- 1: Brennkraftmaschine
- 2: Generator
- 3: erster Gleichrichter
- 4: erster Gleichspannungskreis
- 5: erster Wechselrichter
- 6: Antriebsmotor
- 7: zweiter Gleichrichter
- 8: zweiter Gleichspannungskreis
- 9: zweiter Wechselrichter
- 10, 11, 12, 13, 24, 25, 30,31: Trennschalter
- 14: Verbindungsschalter
- 15: x weitere Wechselrichter, wobei x ≥1
- 16: y weitere Wechselrichter, wobei y ≥1
- 17: z weitere Wechselrichter, wobei z ≥1 .
- 18, 19: Stromrichtungsbegrenzungselement
- 20: n weitere Gleichrichter, wobei n ≥1
- 21: m weitere Wechselrichter, wobei m ≥1
- 22: Gleichspannungskreis eines jeden der n weiteren Gleichrichter 20
- 23: r weitere Gleichrichter, wobei r ≥1
- 26: p weitere Gleichrichter, wobei p ≥1
- 27: q weitere Wechselrichter, wobei q ≥1
- 28: Gleichspannungskreis eines jeden der p weiteren Gleichrichter 26
- 29: v weitere Gleichrichter, wobei v ≥1
- 40: Getriebe
- A, B: Statorwicklungssätze des Generators

## Patentansprüche

1. Kraftstoffelektrisches Antriebssystem mit einer Brennkraftmaschine (1), mit einem von der Brennkraftmaschine (1) angetriebenen Generator (2), welcher Generator (2) einen ersten Statorwicklungssstz (A) aufweist,
mit einem ersten Gleichrichter (3), welcher erste Gleichrichter (3) wechselspannungsseitig mit dem ersten Statorwicklungssatz (A) und gleichspannungsseitig mit einem ersten Gleichspannungskreis (4) verbunden ist,
mit einem ersten Wechselrichter (5), welcher erste Wechselrichter (5) gleichspannungsseitig mit dem ersten Gleichspannungskreis (4) und wechselspannungsseitig mit einem Antriebsmotor (6) verbunden ist,
**dadurch gekennzeichnet,**
**dass** der Generator (2) einen zweiten Statorwicklungssatz (B) aufweist,
**dass** ein zweiter Gleichrichter (7) wechselspannungsseitig mit dem zweiten Statorwicklungssatz (B) und gleichspannungsseitig mit einem zweiten Gleichspannungskreis (8) verbunden ist, und
**dass** ein zweiter Wechselrichter (9) gleichspannungsseitig mit dem zweiten Gleichspannungskreis (8) und wechselspannungsseitig mit dem Antriebsmotor (6) verbunden ist.

2. Kraftstoffelektrisches Antriebssystem nach Anspruch 1, **dadurch gekennzeichnet, dass** in die Verbindung des ersten Statorwicklungssatzes (A) mit dem ersten Gleichrichter (3) ein Trennschalter (10) eingeschaltet ist, und
dass in die Verbindung des zweiten Statorwicklungssatzes (B) mit dem zweiten Gleichrichter (7) ein Trennschalter (11) eingeschaltet ist.

3. Kraftstoffelektrisches Antriebssystem nach Anspruch 1 oder 2, **dadurch gekennzeichnet, dass** in die Verbindung des ersten Wechselrichters (5) mit dem Antriebsmotor (6) ein Trennschalter (12) eingeschaltet ist, und
dass in die Verbindung des zweiten Wechselrichters (9) mit dem Antriebsmotor (6) ein Trennschalter (13) eingeschaltet ist.

4. Kraftstoffelektrisches Antriebssystem nach einem der Ansprüche 1 bis 3, **dadurch gekennzeichnet, dass** der erste Gleichspannungskreis (4) mit dem zweiten Gleichspannungskreis (8) über einen Verbindungsschalter (14) verbindbar und trennbar ist.

5. Kraftstoffelektrisches Antriebssystem nach einem der Ansprüche 1 bis 4, **dadurch gekennzeichnet, dass** x weitere Wechselrichter (15) gleichspannungsseitig mit dem ersten Gleichspannungskreis (4) verbunden sind, wobei x ≥ 1 ist.

6. Kraftstoffelektrisches Antriebssystem nach einem der Ansprüche 1 bis 5, **dadurch gekennzeichnet, dass** y weitere Wechselrichter (16) gleichspannungsseitig mit dem zweiten Gleichspannungskreis (8) verbunden sind, wobei y ≥ 1 ist

7. Kraftstoffelektrisches Antriebssystem nach einem der Ansprüche 1 bis 6, **dadurch gekennzeichnet, dass** z weitere Wechselrichter (17) gleichspannungsseitig mit dem ersten Gleichspannungskreis (4) und mit dem zweiten Gleichspannungskreis (8) verbunden sind, wobei z ≥ 1 ist.

8. Kraftstoffelektrisches Antriebssystem nach Anspruch 7, **dadurch gekennzeichnet, dass** in jede Verbindung des ersten Gleichspannutigskreises (4) mit einem der z weiteren Wechselrichter (17) ein Stromrichtungsbegrenzungselement (18) eingeschaltet ist, und dass in jede Verbindung des zweiten Gleichspannungskreises (8) mit einem der z weiteren Wechselrichter (17) ein Stromrichtungsbegrenzungselement (19) eingeschaltet ist.

9. Kraftstoffelektrisches Antriebssystem nach einem der Ansprüche 1 bis 8, **dadurch gekennzeichnet, dass** n weitere Gleichrichter (20) wechselspannungsseitig mit dem ersten Statorwicklungssatz (A) verbunden sind, wobei n ≥ 1 ist,
und dass m weitere Wechselrichter (21) mit jeweils einem der n Gleichrichter (20) über einen für jeden der n weiteren Gleichrichter (20) vorgesehenen Gleichspannungskreis (22) verbunden sind, wobei m ≥ 1 ist.

10. Kraftstoffelektrisches Antriebssystem nach Anspruch 9, **dadurch gekennzeichnet, dass** r weitere Gleichrichter (23) wechselspannungsseitig mit dem zweiten Statorwicklungssatz (B) verbunden sind, wobei r ≥ 1 und n ≥ r ist, und
dass jeder der r weiteren Gleichrichter (23) gleichspannungsseitig jeweils mit einem der für die n weiteren Gleichrichter (20) vorgesehenen Gleichspannungskreise (22) verbunden ist.

11. Kraftstoffelektrisches Antriebssystem nach Anspruch 10, **dadurch gekennzeichnet, dass** in jede Verbindung des zweiten Statorwickiungssatzes (B) mit einem der r weiteren Gleichrichter (23) ein Trennschalter (24) eingeschaltet ist.

12. Kraftstoffelektrisches Antriebssystem nach einem der Ansprüche 9 bis 11, **dadurch gekennzeichnet, dass** in jede Verbindung des ersten Statorwicklungssatzes (A) mit einem der n weiteren Gleichrichter (20) ein Trennschalter (25) eingeschaltet ist.

13. Kraftstoffelektrisches Antriebssystem nach einem der Ansprüche 1 bis 12, **dadurch gekennzeichnet, dass** p weitere Gleichrichter (26) wechselspannungsseitig mit dem zweiten Statorwicklungssatz (B) verbunden sind, wobei p ≥ 1 ist,
und dass q weitere Wechselrichter (27) mit jeweils einem der p Gleichrichter (26) über einen für jeden der p weiteren Gleichrichter (26) vorgesehenen Gleichspannungskreis (28) verbunden sind, wobei q ≥ 1 ist.

14. Kraftstoffelektrisches Antriebssystem nach Anspruch 13, **dadurch gekennzeichnet, dass** v weitere Gleichrichter (29) wechselspannungsseitig mit dem ersten Statorwicklungssatz (A) verbunden sind, wobei v ≥ 1 und p ≥ v ist, und
dass jeder der v weiteren Gleichrichter (29) gleichspannungsseitig jeweils mit einem der für die p weiteren Gleichrichter (26) vorgesehenen Gleichspannungskreise (28) verbunden ist.

15. Kraftstoffelektrisches Antriebssystem nach Anspruch 14, **dadurch gekennzeichnet, dass** in jede Verbindung des ersten Statorwicklungssatzes (A) mit einem der v weiteren Gleichrichter (29) ein Trennschalter (30) eingeschaltet ist.

16. Kraftstoffelektrisches Antriebssystem nach einem der Ansprüche 13 bis 15, **dadurch gekennzeichnet, dass** in jede Verbindung des zweiten Statorwicklungssatzes (B) mit einem der p weiteren Gleichrichter (26) ein Trennschalter (31) eingeschaltet ist.

## Claims

1. Fuel/electric drive system having an internal combustion engine (1), having a generator (2) which is driven by the internal combustion engine (1) and which has a first stator winding set (A),
having a first rectifier (3) which is connected on the alternating voltage side to the first stator winding set (A) and on the direct voltage side to a first direct voltage circuit (4),
having a first power inverter (5) which is connected on the direct voltage side to the first direct voltage circuit (4) and on the alternating voltage side to a drive motor (6),
**characterized**
**in that** the generator (2) has a second stator winding set (B),
**in that** a second rectifier (7) is connected on the alternating voltage side to the second stator winding set (B) and on the direct voltage side to a second direct voltage circuit (8), and
**in that** a second power inverter (9) is connected on the direct voltage side to the second direct voltage circuit (8) and on the alternating voltage side to the drive motor (6).

2. Fuel/electric drive system according to Claim 1, **characterized in that** an isolating switch (10) is connected into the connection of the first stator winding set (A) to the first rectifier (3), and
**in that** an isolating switch (11) is connected into the connection of the second stator winding set (B) to the second rectifier (7).

3. Fuel/electric drive system according to Claim 1 or 2, **characterized in that** an isolating switch (12) is connected into the connection of the first power inverter (5) to the drive motor (6), and
**in that** an isolating switch (13) is connected into the connection of the second power inverter (9) to the drive motor (6).

4. Fuel/electric drive system according to one of Claims 1 to 3, **characterized in that** the first direct voltage circuit (4) can be connected to the second direct voltage circuit (8) and disconnected from it via a connecting switch (14).

5. Fuel/electric drive system according to one of Claims 1 to 4, **characterized in that** x further power inverters (15) are connected on the direct voltage side to the first direct voltage circuit (4), where x ≥ 1.

6. Fuel/electric drive system according to one of Claims 1 to 5, **characterized in that** y further power inverters (16) are connected on the direct voltage side to the second direct voltage circuit (8), where y ≥ 1.

7. Fuel/electric drive system according to one of Claims 1 to 6, **characterized in that** z further power inverters (17) are connected on the direct voltage side to the first direct voltage circuit (4) and to the second direct voltage circuit (8), where z ≥ 1.

8. Fuel/electric drive system according to Claim 7, **characterized in that** an element (18) for limiting the direction of current is connected into each connection of the first direct voltage circuit (4) to one of the z further power inverters (17), and
**in that** an element (19) for limiting the direction of current is connected into each connection of the second direct voltage circuit (8) to one of the z further power inverters (17).

9. Fuel/electric drive system according to one of Claims 1 to 8, **characterized in that** n further rectifiers (20) are connected on the alternating voltage side to the first stator winding set (A), where n ≥ 1,
and **in that** m further power inverters (21) are connected to in each case one of the n rectifiers (20) via a direct voltage circuit (22) which is provided for each of the n further rectifiers (20), where m ≥ 1.

10. Fuel/electric drive system according to Claim 9, **characterized in that** r further rectifiers (23) are connected on the alternating voltage side to the second stator winding set (B), where r ≥ 1 and n ≥ r, and
**in that** each of the r further rectifiers (23) is connected on the direct voltage side to in each case one of the direct voltage circuits (22) which are provided for the n further rectifiers (20).

11. Fuel/electric drive system according to Claim 10, **characterized in that** an isolating switch (24) is connected into each connection of the second stator winding set (B) to one of the r further rectifiers (23).

12. Fuel/electric drive system according to one of Claims 9 to 11, **characterized in that** an isolating switch (25) is connected into each connection of the first stator winding set (A) to one of the n further rectifiers (20).

13. Fuel/electric drive system according to one of Claims 1 to 12, **characterized in that** p further rectifiers (26) are connected on the alternating voltage side to the second stator winding set (B), where p ≥ 1,
and **in that** q further power inverters (27) are connected in each case to one of the p rectifiers (26) via a direct voltage circuit (28) which is provided for each of the p further rectifiers (26), where q ≥ 1.

14. Fuel/electric drive system according to Claim 13, **characterized in that** v further rectifiers (29) are connected on the alternating voltage side to the first stator winding set (A), where v ≥ 1 and p ≥ v, and
**in that** each of the v further rectifiers (29) is connected on the direct voltage side to in each case one of the direct voltage circuits (28) which are provided for the p further rectifiers (26).

15. Fuel/electric drive system according to Claim 14, **characterized in that** an isolating switch (30) is connected into each connection of the first stator winding set (A) to one of the v further rectifiers (29).

16. Fuel/electric drive system according to one of Claims 13 to 15, **characterized in that** an isolating switch (31) is connected into each connection of the second stator winding set (B) to one of the p further rectifiers (26).

## Revendications

1. Système d'entraînement électrique et à carburant, qui présente :
un moteur à combustion interne (1),
un générateur (2) entraîné par le moteur à combustion interne (1), ce générateur (2) présentant un jeu d'enroulements de stator (A),
un premier redresseur (3), ce premier redresseur (3) étant relié par son côté tension alternative au premier jeu (A) d'enroulements de stator et par son côté tension continue à un premier circuit (4) à tension continue,
un premier onduleur (5), ce premier onduleur (5) étant relié par son côté tension continue au premier circuit (4) à tension continue et du côté tension alternative à un moteur d'entraînement (6),
**caractérisé en ce que**
le générateur (2) présente un deuxième jeu (B) d'enroulements de stator,
**en ce qu'**un deuxième redresseur (7) est relié par son côté tension alternative au deuxième jeu (B) d'enroulements de stator et du côté tension continue à un deuxième circuit (8) à tension continue et
**en ce qu'**un deuxième redresseur (9) est relié par son côté tension continue au deuxième circuit (8) à tension continue et du côté tension alternative au moteur d'entraînement (6).

2. Système d'entraînement électrique et à carburant selon la revendication 1, **caractérisé en ce qu'**un commutateur de séparation (10) est raccordé dans la liaison entre le premier jeu (A) d'enroulements de stator et le premier redresseur (3) et **en ce qu'**un commutateur de séparation (11) est raccordé dans la liaison entre le deuxième jeu (B) d'enroulements de stator et le deuxième redresseur (7).

3. Système d'entraînement électrique et à carburant selon les revendications 1 ou 2, **caractérisé en ce qu'**un commutateur de séparation (12) est raccordé dans la liaison entre le premier onduleur (5) et le moteur d'entraînement (6) et **en ce qu'**un commutateur de séparation (13) est raccordé dans la liaison entre le deuxième onduleur (9) et le moteur d'entraînement (6).

4. Système d'entraînement électrique et à carburant selon l'une des revendications 1 à 3, **caractérisé en ce qu'**un commutateur de liaison (14) permet de relier le premier circuit (4) à tension continue au deuxième circuit (8) à tension continue et de l'en séparer.

5. Système d'entraînement électrique et à carburant selon l'une des revendications 1 à 4, **caractérisé en ce que** x autres onduleurs (15) sont reliés par leur côté tension continue au premier circuit (4) à tension continue, avec x ≥ 1.

6. Système d'entraînement électrique et à carburant selon l'une des revendications 1 à 5, **caractérisé en ce que** y autres onduleurs (16) sont reliés par leur côté tension continue au deuxième circuit (8) à tension continue, avec y ≥1.

7. Système d'entraînement électrique et à carburant selon l'une des revendications 1 à 6, **caractérisé en ce que** z autres onduleurs (17) sont reliés par leur côté tension continue au premier circuit (4) à tension continue et au deuxième circuit (8) à tension continue, avec z ≥ 1.

8. Système d'entraînement électrique et à carburant selon la revendication 7, **caractérisé en ce qu'**un élément (18) de restriction du sens du courant est raccordé dans chaque liaison entre le premier circuit (4) à tension continue et l'un des onduleurs (17) et **en ce qu'**un élément (19) de restriction du sens du courant est raccordé dans chaque liaison entre le deuxième circuit (8) à tension continue et l'un des autres onduleurs (17).

9. Système d'entraînement électrique et à carburant selon l'une des revendications 1 à 8, **caractérisé en ce que** n autres redresseurs (20) sont reliés par leur côté tension alternative au premier jeu (A) d'enroulements de stator, avec n ≥ 1, et **en ce que** m autres onduleurs (21) sont reliés chacun respectivement à un des n redresseurs (20) par un circuit (22) à tension continue prévu pour chacun des n autres redresseurs (20), avec m ≥1.

10. Système d'entraînement électrique et à carburant selon la revendication 9, **caractérisé en ce que** r autres redresseurs (23) sont reliés par leur côté tension alternative au deuxième jeu (B) d'enroulements de stator, avec r ≥ 1 et n ≥ r et **en ce que** chacun des r autres redresseurs (23) est relié par son côté tension continue à un des circuits (22) à tension continue prévus pour les n autres redresseurs (20).

11. Système d'entraînement électrique et à carburant selon la revendication 10, **caractérisé en ce qu'**un commutateur de séparation (24) est raccordé dans chaque liaison entre le deuxième jeu (B) d'enroulements de stator et l'un des r autres redresseurs (23).

12. Système d'entraînement électrique et à carburant selon l'une des revendications 9 à 11, **caractérisé en ce qu'**un commutateur de séparation (25) est raccordé dans chaque liaison entre le premier jeu (A) d'enroulements de stator et l'un des n autres redresseurs (20).

13. Système d'entraînement électrique et à carburant selon l'une des revendications 1 à 12, **caractérisé en ce que** p autres redresseurs (26) sont reliés par leur côté tension alternative au deuxième jeu (B) d'enroulements de stator, avec p ≥ 1, et **en ce que** q autres onduleurs (27) sont reliés chacun respectivement à l'un des p redresseurs (26) par l'intermédiaire d'un circuit (28) à tension continue prévu pour chacun des p autres redresseurs (26), avec q ≥ 1.

14. Système d'entraînement électrique et à carburant selon la revendication 13, **caractérisé en ce que** v autres redresseurs (29) sont reliés par leur côté tension alternative au premier jeu (A) d'enroulements de stator, avec v ≥ 1 et p ≥ v, et **en ce que** chacun des v autres redresseurs (29) est relié par son côté tension continue à un circuit (28) à tension continue prévu pour les p autres redresseurs (26).

15. Système d'entraînement électrique et à carburant selon la revendication 14, **caractérisé en ce qu'**un commutateur de séparation (30) est raccordé dans chaque liaison entre le premier jeu (A) d'enroulements de stator et l'un des v autres redresseurs (29).

16. Système d'entraînement électrique et à carburant selon l'une des revendications 13 à 15, **caractérisé en ce qu'**un commutateur de séparation (31) est raccordé dans chaque liaison du deuxième jeu (B) d'enroulements de stator et l'un des p autres redresseurs (26).
